# DEMANDE DE BREVET EUROPEEN

(11) **EP 0 533 523 A1**
(43) Date de publication de la demande: **24.03.1993**
(21) Numéro de dépôt: 92402415.1
(22) Date de dépôt: 04.09.1992
(51) Int. Cl.: G01M 3/32

(54) **Dispositif et procédé pour tester l'étanchéité d'un corps de boîte**

(30) Priorité: 20.09.1991 FR 9111604
(71) Demandeur: CARNAUDMETALBOX, F-75017 Paris (FR)
(72) Inventeur: Barrou, Antoine, F-02000 Laon (FR); Laquerbe, Bernard, F-78124 Mareil sur Mauldre (FR)
(74) Mandataire: CABINET BONNET-THIRION

(57) **Abrégé**

Le dispositif comporte un caisson (1) avec un couvercle (2) apte à contenir un corps de boîte (3) avec fond rapporté, le couvercle (2) étant adapté à couvrir et fermer le caisson (1) et le corps de boîte (3) de façon hermétique de manière à créer une première chambre (6) et une seconde chambre (7), séparées par les parois du corps de boîte lorsque ce dernier est en place, des moyens (12) pour introduire un gaz sous pression à l'intérieur de la première chambre (6), un circuit pneumatique de détection de fuites communiquant avec l'intérieur de la seconde chambre (7) et comportant un tube (16) de petit diamètre plongeant dans un liquide (15), et des moyens (18) pour détecter des bulles de gaz s'échappant du tube.

Suivant le procédé on établit une surpression à l'intérieur de la première chambre (6), et on détecte le passage de gaz vers la seconde chambre (7).

## Description

La présente invention concerne un dispositif et un procédé pour tester l'étanchéité d'un corps de boîte avec fond rapporté, plus particulièrement un corps de boîte pour un emballage appertisé.

On connaît divers procédés pour contrôler l'étanchéité d'un corps de boîte. Un des plus simples consiste, après fermeture d'un corps de boîte vide avec un bouchon hermétique, à mettre sous pression l'intérieur du corps de boîte et à plonger l'ensemble sous l'eau. Une fuite éventuelle se manifeste par la création de bulles d'air. Ce procédé présente des inconvénients. Les corps de boîte ne présentant pas de défauts doivent être ultérieurement séchés. Le procédé n'est pas facilement automatisable.

Un autre procédé consiste, après fermeture hermétique et mise sous pression de l'intérieur du corps de boîte, à mesurer la chute de pression interne au moyen d'un capteur de pression. Ce procédé est automatisable mais la finesse de détection liée à la sensibilité du capteur est insuffisante et ne permet de détecter que des fuites notables.

Dans le cas d'un emballage appertisé, après stérilisation, ce dernier présente une légère dépression interne. En effet, le remplissage et le sertissage du couvercle s'effectuent à chaud, et lorsque l'emballage est refroidi, il se crée automatiquement cette légère dépression. Si l'emballage présente un défaut, une fuite se manifeste par un passage d'air ou de liquide de l'extérieur vers l'intérieur de l'emballage.

La présente invention propose un dispositif et un procédé rapide et automatisable pour tester l'étanchéité d'un corps de boîte sans que ce dernier ne soit au contact d'un liquide, et offrant la possibilité de recréer les contraintes auxquelles est soumis un emballage appertisé. Le dispositif selon l'invention comporte en outre des moyens de détection dont la sensibilité permet de détecter des fuites de faible importance.

Elle propose un dispositif pour tester l'étanchéité d'un corps de boîte caractérisé en ce qu'il comporte un caisson avec un couvercle, ledit caisson étant apte à contenir un corps de boîte avec un fond rapporté, ledit couvercle étant adapté à couvrir et fermer le caisson et le corps de boîte de façon hermétique de manière à créer une première chambre et une seconde chambre séparées par les parois du corps de boîte lorsque ce dernier est en place, des moyens pour introduire un gaz sous pression à l'intérieur de ladite première chambre, un circuit de pneumatique de détection de fuites communiquant avec l'intérieur de ladite seconde chambre et comportant un tube de petit diamètre plongeant dans un liquide, et des moyens pour détecter des bulles de gaz s'échappant dudit tube.

Grâce à ces dispositions, le corps de boîte n'est à aucun moment au contact d'un liquide. Le gaz sous pression est généralement de l'air.

Les éventuelles fuites se traduisent par l'apparition de bulles qui sont localisées à la sortie d'un tube de petit diamètre. Ceci permet de détecter des fuites de faible importance.

Par ailleurs, selon l'invention, il est avantageux de réaliser le test d'étanchéité du corps de boîte en créant une surpression à l'extérieur du corps de boîte pour ensuite détecter l'éventuel passage d'air de l'extérieur vers l'intérieur du corps de boîte. On peut ainsi simuler la dépression réellement subie par les emballages appertisés lors de leur refroidissement et réaliser un test fiable proche de la réalité.

Ainsi, selon un mode de réalisation préféré, correspondant plus particulièrement aux emballages appertisés, on définit la première chambre par l'espace situé entre les parois du caisson et les parois du corps de boîte, et on définit la seconde chambre par l'espace situé à l'intérieur du corps de boîte. Le circuit pneumatique communique alors avec l'intérieur du corps de boîte tandis que les moyens pour injecter l'air sous pression sont reliés à l'extérieur du corps de boîte.

Selon des caractéristiques supplémentaires, il est prévu des moyens pour créer aussi une pression à l'intérieur du corps de boîte. Cette disposition permet dans une étape préliminaire au test d'étanchéité, de faire "gonfler" le corps de boîte pour simuler l'augmentation de pression intérieure supportée par la boîte lors de la stérilisation.

Selon d'autres caractéristiques encore, il est prévu d'autres moyens de mesure pneumatique pour mesurer une éventuelle augmentation de pression à l'extérieur du corps de boîte pendant l'étape préliminaire citée précédemment, permettant de détecter des fuites importantes. On peut ainsi détecter et rejeter plus rapidement les corps de boîtes présentant des fuites importantes d'autant mieux que ce volume extérieur est faible.

Il est également prévu des moyens pour réduire le volume d'air à l'intérieur du corps de boîte de manière à diminuer la durée du test.

Selon d'autres caractéristiques encore, le liquide dans lequel s'échappe les éventuelles bulles d'air présente une faible tension superficielle, ce qui permet d'améliorer la sensibilité de détection, les bulles étant alors plus fines.

La présente invention propose également un procédé pour détecter l'étanchéité d'un corps de boîte, caractérisé en ce qu'il consiste à :
- isoler hermétiquement le corps de boîte en créant une première et une seconde chambre séparées par les parois du corps de boîte ;
- établir une surpression de gaz dans ladite première chambre ;
- détecter le passage de gaz de ladite première chambre vers ladite seconde chambre à l'aide d'un circuit pneumatique de détection communiquant avec l'intérieur de ladite seconde chambre et comportant un tube de petit diamètre plongeant dans un liquide.

Suivant un procédé préféré, correspondant au test d'étanchéité d'un corps de boîte pour emballage appertisé, on détecte le passage d'air de l'extérieur vers l'intérieur du corps de boîte, la première chambre étant alors définie à l'extérieur du corps de boîte et la seconde chambre par l'intérieur du corps de boîte.

Avantageusement on prévoit une phase préliminaire pendant laquelle on fait subir au corps de boîte un gonflement en établissant une surpression à l'intérieur du corps de boîte.

Selon une autre caractéristique, on mesure pendant cette phase préliminaire, une éventuelle augmentation de pression à l'extérieur du corps de boîte pour détecter d'éventuelles fuites de grande importance.

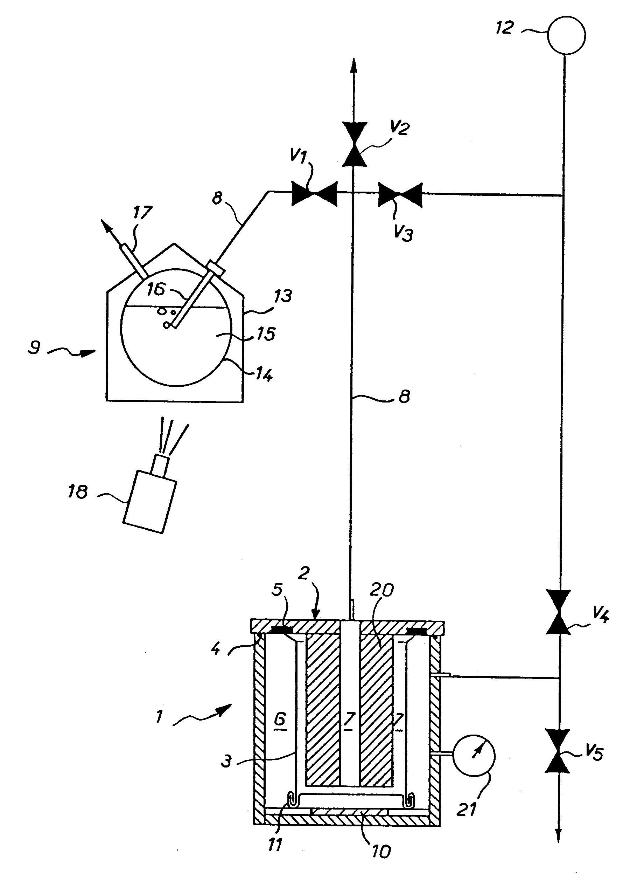

L'invention sera mieux comprise et d'autres avantages ressortiront à la lumière de la description qui va suivre donnée à titre d'exemple et faite en référence à la figure unique sur laquelle est représenté, de façon schématique, un mode de réalisation du dispositif, le corps de boîte à tester étant mis en place.

Le dispositif comprend un caisson 1 et son couvercle 2. Ce caisson est destiné à loger un corps de boîte 3 dont on veut révéler les défauts de fabrication. Ces défauts qui se traduiront par des fuites, peuvent être localisés de façon courante au niveau du fond serti 11 et au niveau de la soudure latérale si elle existe.

Le couvercle 2 du caisson est apte à couvrir et fermer hermétiquement le caisson 1 et le corps de boîte 3, le but étant d'isoler hermétiquement l'intérieur et l'extérieur du corps de boîte. Pour cela, il est prévu, au point de contact du couvercle avec le bord du caisson un premier joint d'étanchéité 4 et au point de contact du couvercle avec le bord supérieur de l'ouverture du corps de boîte, un second joint d'étanchéité 5. Le joint 4 est disposé dans une gorge aménagée dans le bord des parois du caisson. Le joint 5 est disposé dans une gorge aménagée sur la face interne du couvercle du caisson, à une certaine distance de son bord.

Un socle 10 est disposé pour mettre à niveau les bords du corps de boîte et du caisson, afin que l'étanchéité soit bien assurée par le couvercle, et il présente également l'avantage d'être muni de découpes radiales afin de ne pas isoler d'air entre le fond de la boîte et le caisson.

Le couvercle est adapté à être fixé au caisson à l'aide de moyens de fixation classiques (non représentés) de sorte que les joints 4 et 5 soient comprimés et l'étanchéité assurée.

La paroi du corps de boîte divise le caisson en deux chambres, une première chambre 6, ici extérieure, définie par l'espace situé entre les parois du caisson et les parois du corps de boîte et une seconde chambre 7, ici intérieure, définie par l'espace situé à l'intérieur du corps de boîte.

Il est prévu un noyau 20, à introduire dans le corps de boîte pour réduire le volume de la chambre intérieure 7. Ce noyau est solidaire du couvercle.

Un circuit pneumatique de détection 8 communique avec la chambre intérieure 7 par le couvercle du caisson et comporte un tube capillaire 16 débouchant dans une chambre de détection 9. Une vanne V1 reliée au tube capillaire 16 permet d'isoler la chambre de détection 9 du reste du circuit. le circuit 8 est relié à une source d'aire comprimé 12 pour créer une pression dans la chambre intérieure. Une vanne V3 commande la communication de la source 12 avec l'intérieure du corps de boîte. Une vanne de mise à l'air libre V2 permet de ramener la chambre intérieure à la pression atmosphérique.

La chambre de détection est constituée par une enceinte 13 avec une fenêtre 14. L'enceinte communique avec l'extérieure par une ouverture 17. L'enceinte est remplie jusqu'à un certain niveau d'un liquide 15. Le tube capillaire 16 plonge dans ce liquide. Un moyen de détection 18, par exemple une caméra vidéo permet de détecter par la fenêtre 14 des bulles d'air s'échappant du tube 16. On peut également détecter la présence de bulles d'air à l'aide d'une source lumineuse et d'un moyen pour détecter cette source lumineuse, en détectant par exemple l'interruption d'un faisceau lumineux au passage des bulles. De manière préférentielle le liquide est constitué par un mélange 50/50 en volume, d'eau distillée et d'isopropanol, présentant une faible tension superficielle, le but recherché étant d'avoir des bulles de petit diamètre. Ceci permet détecter des fuites de faible importance.

A titre d'exemple, ce mélange permet par rapport à de l'eau, d'obtenir environ trois fois plus de bulles d'air pour une même pression continue d'air.

La chambre extérieure est également reliée à la source d'air comprimé 12. Une vanne V4 commande la communication de la chambre extérieure 6 avec cette source 12 et une vanne de mise à l'air libre V5 commande la mise à pression atmosphérique de la chambre 6.

Pour mesurer la pression à l'intérieur de la chambre extérieure 6 il est prévu un moyen de mesure 21 adapté à mesurer des fuites de grande importance, par exemple un simple pressostat.

Une fois le corps de boîte en place dans le caisson et la fermeture hermétique assurée, le dispositif fonctionne de la manière suivante.

Dans une étape préliminaire, que l'on pourrait qualifier d'étape de mise en condition du corps de boîte, on veut faire "gonfler" celui-ci en vue de mettre en évidence d'éventuels défauts. Pour cela, on ferme les vannes V1 et V2, de manière à isoler la chambre intérieure 7 ainsi que la chambre de détection 9. La chambre extérieure 6 est à pression atmosphérique. On ouvre la vanne V3 et on établit une surpression à l'intérieur du corps de boîte.

Selon une variante de cette étape préliminaire, on isole aussi la chambre extérieure 6 en fermant la vanne V5, pour permettre la mesure, à l'aide du moyen de mesure 21, d'une éventuelle augmentation de pression à l'intérieur de cette chambre. Cette mesure permet de détecter la présence de défauts de grande importance et de rejeter tout de suite le corps de boîte. Cette mesure présente également l'avantage d'éviter ultérieurement un débit d'air trop important dans la chambre de détection 9.

Le test d'étanchéité proprement dit consiste ensuite à:
- isoler la chambre intérieure 7 et la chambre extérieure 6 en fermant les vannes V2 et V5, et ouvrir la vanne V1 pour permettre la communication avec la chambre de détection 9;
- mettre sous pression continue la chambre extérieure 6 en ouvrant la vanne V4 ;
- détecter la formation de bulles s'échappant du tube capillaire 16 à l'aide du moyen de détection 18.

Si un débit de bulles est détecté, indiquant la présence de fuites, le corps de boîte est rejeté.

Pour un corps de boîte pour un emballage appertisé, on établit une différence de pression entre la chambre extérieure 6 et la chambre intérieure 7 d'environ 1 bar. La durée totale du test, avec un test préliminaire pour détecter l'éventuelle présence de fuites notables, sera d'environ 30 secondes.

## Revendications

1. Dispositif pour tester l'étanchéité d'un corps de boîte comportant un caisson (1) apte à contenir un corps de boîte (3) avec un fond rapporté et un couvercle (2) adapté à couvrir et fermer le caisson (1) et le corps de boîte (3) de façon hermétique, de manière à créer une première chambre et une seconde chambre séparées par la paroi du corps de boîte lorsque ce dernier est en place, des moyens (12) pour introduire un gaz sous pression à l'intérieur de ladite première chambre, un circuit pneumatique de détection (8) de fuites communiquant avec l'intérieur de ladite seconde chambre et comportant un tube (16) de petit diamètre plongeant dans un liquide (15), et des moyens (18) pour détecter des bulles de gaz s'échappant dudit tube, caractérisé en ce que ladite première chambre est définie par l'espace situé entre les parois du caisson et la paroi (3) du corps de boîte, définissant une chambre dite extérieure (6) et en ce que ladite seconde chambre est définie par l'espace situé à l'intérieur du corps de boîte, définissant une chambre dite intérieure (7).

2. Dispositif selon la revendication 1, caractérisé en ce qu'il comporte des moyens (12) pour créer une pression dans ladite chambre intérieure (7).

3. Dispositif selon la revendication 1 ou 2, caractérisé en ce qu'il comporte des moyens (20) pour réduire le volume de gaz dans ladite chambre intérieure (7).

4. Dispositif selon la revendication 3, caractérisé en ce que lesdits moyens pour réduire le volume d'air dans la chambre intérieure (7) sont constitués par un noyau (20) solidaire du couvercle (2) du caisson.

5. Dispositif selon l'une quelconque des revendications précédentes, caractérisé en ce que le tube (16) plongeant dans le liquide (15) est un tube capillaire.

6. Dispositif selon l'une quelconque des revendications précédentes, caractérisé en ce qu'il comporte des moyens (21) pour mesurer la pression dans ladite chambre extérieure (6).

7. Dispositif selon l'une quelconque des revendications précédentes, caractérisé en ce que le liquide (15) présente une faible tension superficielle.

8. Dispositif selon l'une quelconque des revendications précédentes, caractérisé en ce que le moyen de détection (18) comprend une caméra vidéo.

9. Dispositif selon l'une quelconque des revendications précédentes, caractérisé en ce que le moyen de détection (18) comprend une source lumineuse et un système de détection de cette source lumineuse.

10. Procédé pour tester l'étanchéité d'un corps de boîte, où l'on isole hermétiquement le corps de boîte (3) en créant une chambre (7) à l'intérieur du corps de boîte et une chambre (6) à l'extérieur, séparées par la paroi du corps de boîte, caractérisé en ce qu'il consiste à établir une surpression de gaz dans ladite chambre extérieure (6) et à détecter le passage de gaz de ladite chambre extérieure (6) vers ladite chambre intérieure (7) à l'aide d'un circuit pneumatique de détection de fuites (8) communiquant avec ladite chambre intérieure (7) et comportant un tube (16) de petit diamètre plongeant dans un liquide (15).

11. Procédé selon la revendication 10, caractérisé en ce que dans une étape préliminaire on établit une surpression dans la chambre intérieure (7).

12. Procédé selon la revendication 10 ou 11, caractérisé en que l'on réduit le volume de gaz dans ladite chambre intérieure (7).

13. Procédé selon l'une quelconque des revendications 10 à 12, caractérisé en ce que l'on isole hermétiquement l'extérieur (7) du corps de boîte pour y mesurer à l'aide d'un moyen de mesure (21) une éventuelle variation de pression.
